# EUROPEAN PATENT APPLICATION

(11) **EP 4 449 867 A2**
(43) Date of publication of application: **23.10.2024**
(21) Application number: 24163784.2
(22) Date of filing: 27.08.2015
(51) Int. Cl.: A01P 13/02

(54) **HERBICIDAL COMPOSITION AND METHOD FOR CONTROLLING PLANT GROWTH**

(30) Priority: 11.11.2014 GB 201420053
(62) Divisional of application: 15858203.1
(71) Applicant: Rotam Agrochem International Company Limited, Chai Wan (HK)
(72) Inventor: BRISTOW, James Timothy, Chai Wan (HK)
(74) Representative: Akers, Noel James

(57) **Abstract**

A synergistic herbicidal composition is provided, the composition comprising a herbicidally effective amount of (A) flufenacet and (B) mesotrione. A method of controlling plant growth at a locus comprises applying to the locus herbicidally effective amounts of both flufenacet and mesotrione.

## Description

The present invention relates to a herbicidal composition. The invention also relates to a method of controlling the growth of undesirable vegetation, particularly in crops, including using the aforementioned composition.

The protection of crops from undesirable vegetation, which inhibits crop growth, is a constantly recurring problem in agriculture. To solve this problem, researchers are trying to develop an extensive range of chemicals and chemical formulations effective in the control of such undesirable growth. Chemical herbicides of many types have been disclosed in the literature and a large number are in commercial use.

Some herbicidal active ingredients have been shown to be more effective when applied in combination rather than applied individually. This effect is referred to as "synergism." According to Herbicide Handbook of the Weed Science Society of America, Seventh Edition, 1994, page 318, "synergism" is an interaction of two or more factors such that the effect when combined is greater than the predicted effect based on the response to each factor applied separately.

Flufenacet and mesotrione are two compounds known to be herbicidally active and to be of use in the control of unwanted plant growth. Most surprisingly it has now been found that flufenacet and mesotrione display a synergistic effect in the control of plant growth when applied in combination, for example in a composition comprising both compounds or when applied together to a locus to be treated.

As noted above, both flufenacet and mesotrione are independently known in the art for their effects on plant growth. They are disclosed in The Pesticides Manual, Twelfth Edition, 2000, published by The British Crop Protection Council. Both compounds are also commercially available in a range of compositions.

The synergistic effects of the present invention can provide one or more of a number of advantages over the use of the individual components (A) flufenacet and (B) mesotrione. In particular, the rates of application of the individual components can be markedly reduced, while maintaining a high level of herbicidal efficacy of both compounds. A composition comprising the two components can exhibit activity against a considerably broader weed spectrum, compared with either of the components when applied alone. Further, a composition comprising both components has the potential to control weed species at a low application rate, at which the individual components alone were ineffective. The components when applied in combination can exhibit a speed of action greater than that of the individual components.

In a first aspect, the present invention provides a composition comprising a herbicidally effective amount of (A) flufenacet and (B) mesotrione.

The composition of the present invention contains a herbicidally effective amount of a combination of (A) flufenacet and (B) mesotrione. The term "herbicide" as used herein, refers to a compound that exhibits activity in the control of the growth of plants. The term "herbicidally effective amount" as used herein, refers to the quantity of such a compound or combination of such compounds that is capable of producing a controlling effect on the growth of plants. A controlling effect includes all deviations from the natural development and growth of the plant, including, for example, killing the plant, retardation of one or more aspects of the development and growth of the plant, leaf burn, albinism, dwarfing and the like. The term "plants" as used herein refers to all physical parts of a plant, including shoots, leaves, needles, stalks, stems, fruit bodies, fruits, seeds, roots, tubers and rhizomes.

Flufenacet (IUPAC name: 4'-fluoro-*N*-isopropyl-2-(5-trifluoromethyl-1,3,4-thiadiazol-2-yloxy)acetanilide) has the following chemical structure:

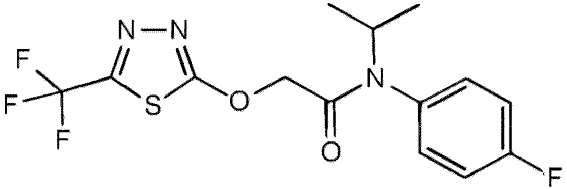

Flufenacet is commercially available and methods for its preparation are known in the art. Flufenacet is a selective inhibitor of cell growth and cell division. It affects cell membranes of meristematic tissues in the target plant, interfering with both membrane selectivity and permeability. This, in turn, prevents cell division, thereby preventing unwanted growth. Flufenacet is particularly effective in the control of certain species of grass.

Mesotrione (IUPAC name: 2-(4-mesyl-2-nitrobenzoyl)cyclohexane-1,3-dione) has the following chemical structure:

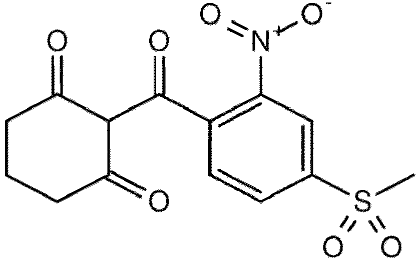

Mesotrione is commercially available in herbicidal compositions. Although mesotrione is most conveniently obtained as a commercial product, it can be prepared as described in US 5,006,158, while its salts or metal chelates can be prepared as described in US 5,912,207. Mesotrione is a p-Hydroxyphenyl pyruvate dioxygenase inhibitor, which ultimately affects carotenoid biosynthesis in the treated plants.

As noted above, the present invention relates to a synergistic herbicidal composition comprising a herbicidally effective amount of (A) flufenacet and (B) mesotrione for controlling the growth of undesirable vegetation.

The present invention also provides a method of controlling undesirable vegetation in plants comprising applying to the vegetation or to the locus thereof a herbicidally effective amount of the herbicidal composition of the first aspect of the present invention.

In a still further aspect, the present invention provides a method of controlling plant growth at a locus comprising applying to the locus herbicidally effective amounts of flufenacet and mesotrione.

In a still further aspect, the present invention provides the use of a combination of flufenacet and mesotrione in the control of plant growth at a locus.

The composition and methods of the present invention are useful in controlling undesirable vegetation in a range of crops, including maize, soybean, cereals, cotton, potatoes, sunflower, peanuts and sugarcane. The control of undesirable vegetation in such crops may be achieved by applying to the locus mesotrione and flufenacet in suitable amounts. The active compounds may be applied to the locus together or separately. If applied separately, the active compounds may be applied at the same time and/or consecutively. The control may comprise applying to the vegetation or the locus thereof a herbicidally effective amount of the herbicidal composition.

The compositions of the present invention may be employed to control the growth of a range of different plants. The species spectrums of (A) flufenacet and (B) mesotrione, that is the weed species that the respective compounds control, are broad and highly complementary. Flufenacet controls weeds such as grasses and broadleaved weeds. Mesotrione controls most broadleaved weeds.

It has been surprisingly found that a combination of flufenacet and mesotrione exhibits a very significant synergistic action in the control of many common weeds, including foxtail (*Setaria spp*.), wild finger millet (*Eleusine spp*.), cough grass (*Digitaria spp*.), rye grass (*Lolium spp*.)*,* shepherds purse (*Capsella bursapastories*), fat hen *(Chenopodium album),* double thorn (*Oxygonum sinuatum*), black bind weed (*polygonum convolvulus*), mexican marigold (*Tagetes minuta*), gallant soldier (*Galinsoga parviflora*), white charlock (*Raphanus raphanastrium*), blackgrass (*Alopecurus spp*.), meadow grass (*Poa spp*.), silky bent grass (*Apera spp*.)*,* barnyardgrass (*Echinochloa spp*.), rough cocklebur (*Xanthium strumarium*), great ragweed (*Ambrosia trifida*), Velvetleaf (*Abutilon theophrasti*)*,* goosefoots (*Chenopodium spp*.), amaranth (*Amaranthus spp*.), knotweed (*polygonum spp*.), Lamb's-quarters *(Chenopodium album),* redroot pigweed (*Amaranthus retroflexus*), wild mustard (*Sinapis arvensis*), common ragweed (*Ambrosia artemisiifolia*), tall waterhemp (*Amaranthus tuberculatus*), volunteer adzuki bean (*Vigna angularis*), vetch (*Vicia spp*.), creeping buttercup (*Ranunculus repens*), eastern black nightshade (*Solanum ptychanthum*), mercuries (*Mercurialis spp*.), velvetleaf (*Abutilon spp*.), angel's trumpets (*Datura spp*.), black nightshade (*Solanum spp*.), common orache (*Atriplexpatula*), thorn-apple (*Datura stramonium*), annual mercury (*Mercurialis annua*).

In one embodiment, the method and composition of the present invention are used in the control of one or more of the aforementioned plants, with the exception of *Digitaria spp., Setaria spp., Echinochloa spp., Amaranthus spp.,* and *Solanum spp.*

More particularly, the method and composition of the present invention are used in the control of one or more of the aforementioned plants, with the exception of crabgrass, foxtail, barnyard grass, pigweed and black nightshade.

It has been found that the composition and methods of this invention are of particular use in the control of the growth of *Setaria spp., Echinochloa spp., Digitaria spp., Lolium spp., Chenopodium spp., Amaranthus spp., Solanum spp., Mercurialis spp., Polygonum spp., Abutilon spp.* and *Datura spp.* In particular, it has been found that a combination of (A) flufenacet and (B) mesotrione is effective in the control of *Lolium spp., Chenopodium spp., Mercurialis spp., Polygonum spp., Abutilon spp.* and *Datura spp.*

The synergistic effects of (A) flufenacet and (B) mesotrione when combined or used together are exhibited in a wide range of weight ratios of the two components. In the compositions of this invention or in use, the weight ratio of (A) flufenacet to (B) mesotrione preferably is up to 50:1, more preferably up to 20:1, still more preferably up to 10:1, more preferably still up to 5:1, with a ratio up to 2:1 being preferred in many embodiments. The weight ratio of (A) flufenacet to (B) mesotrione is preferably greater than 1:50, more preferably greater than 1:20, still more preferably greater than 1:10, more preferably still greater than 1:5, with a ratio of about 1:2 being suitable for many embodiments. The weight ratio of flufenacet to mesotrione preferably lies within the range of from about 50:1 to about 1:50. Preferably, the weight ratio of (A) flufenacet and (B) mesotrione is from about 20:1 to about 1:20, more preferably from about 20:1 to about 1:10, still more preferably from about 5:1 to about 1:2, more preferably still from about 2:1 to about 1:2.

The active synergistic components may be present in the composition of the present invention in a wide range of amounts. In preferred embodiments, the total amount of (A) flufenacet and (B) mesotrione is from about 5% to 99% by weight of the composition. In some embodiments of this invention, the composition contains, by weight, from 10% to 98% of (A) flufenacet and from 5% to 20% of (B) mesotrione. In some embodiments of this invention, the composition contains, by weight, 12% to 36% of (A) flufenacet and 7.5% to 15% of (B) mesotrione.

In general, the application rate of the active ingredients flufenacet and mesotrione depends on such factors as the type of weed, type of crop plant, soil type, season, climate, soil ecology and various other factors. The application rate of the composition for a given set of conditions can readily be determined by routine trials.

In general the composition or method of the present invention can be applied at an application rate of from about 0.15 kilograms/hectare (kg/ha) to about 1.2 kg/ha of the total amount of active ingredient (A) flufenacet and (B) mesotrione being applied. Preferably, the application rate is from about 0.15 kg/ha to about 0.6 kg/ha of the active ingredients. In some embodiments of this invention, the application rate of the active ingredients is from 100 to 1000 g/ha of (A) flufenacet and from 50 to 200 g/ha of (B) mesotrione. In some embodiment of this invention, the application rate of the active ingredients is from 120 to 360 g/ha of (A) flufenacet and 75 to 150 g/ha of (B) mesotrione.

As noted above, in the present invention, flufenacet and mesotrione may be applied either separately or combined as part of a two-part herbicidal system, such as the composition of the present invention.

The compositions of this invention can be formulated in conventional manner, for example by mixing flufenacet and mesotrione with appropriate auxiliaries. Suitable auxiliaries will depend upon such factors as the type of formulation and will be known to the person skilled in the art.

In particular, the composition may further comprise one or more auxiliaries selected from extenders, carriers, solvents, surfactants, stabilizers, anti-foaming agents, anti-freezing agents, preservatives, antioxidants, colorants, thickeners, solid adherents, fillers, wetting agents, dispersing agents, lubricants, anticaking agents, deformers and diluents. Such auxiliaries are known in the art and are commercially available. Their use in the formulation of the compositions of the present invention will be apparent to the person skilled in the art.

Suitable formulations for applying the combination of flufenacet and mesotrione and for the compositions of the present invention include water-soluble concentrates (SL), emulsifiable concentrates (EC), emulsions (EW), micro-emulsions (ME), suspension concentrates (SC), oil-based suspension concentrates (OD), flowable suspensions (FS), water-dispersible granules (WG), water-soluble granules (SG), water-dispersible powders (WP), water soluble powders (SP), granules (GR), encapsulated granules (CG), fine granules (FG), macrogranules (GG), aqueous suspo-emulsions (SE), capsule suspensions (CS) and microgranules (MG).

In one embodiment, the composition of the present invention is formulated as any of the aforementioned types, with the exception of a wettable powder (WP).

Preferred formulation types for the composition of the present invention are emulstifiable concentrates (EC), suspension concentrates (SC), water-dispersible granules (WG) and capsule suspensions (CS).

The composition may comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The composition may include one or more surfactants, which are preferably non-ionic, cationic and/or anionic in nature, and surfactant mixtures which have good emulsifying, dispersing and wetting properties, depending upon the active compound/compounds being formulated. Suitable surfactants are known in the art and are commercially available.

Suitable anionic surfactants can be both so-called water-soluble soaps and water-soluble synthetic surface-active compounds. Soaps which may be used include the alkali metal, alkaline earth metal or substituted or unsubstituted ammonium salts of higher fatty acids (C₁₀ to C₂₂), for example the sodium or potassium salt of oleic or stearic acid, or of natural fatty acid mixtures.

The surfactant may comprise an emulsifier, dispersant or wetting agent of ionic or nonionic type. Examples of such surfactants include salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, and phosphoric esters of polyethoxylated phenols or alcohols.

The presence of at least one surfactant is generally required when the active compound and/or the inert carrier and/or auxiliary/adjuvant are insoluble in water and the vehicle for the final application of the composition is water.

The composition optionally further comprises one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and commercially available.

The surfactants and polymeric stabilizers mentioned above are generally believed to impart stability to the composition, in turn allowing the composition to be formulated, stored, transported and applied.

Suitable anti-foaming agents include all substances which can normally be used for this purpose in agrochemical compositions. Suitable anti-foaming agents are known in the art and are available commercially. Particularly preferred anti-foaming agents are mixtures of polydimethylsiloxanes and perfluroalkylphosphonic acids, such as the silicone anti-foaming agents commercially available from GE or Compton.

Suitable solvents for inclusion in the composition may be selected from all customary organic solvents which thoroughly dissolve the active compounds flufenacet and mesotrione. Again, suitable organic solvents for flufenacet and mesotrione are known in the art. The following may be mentioned as being preferred: N-methyl pyrrolidone, N-octyl pyrrolidone, cyclohexyl-1-pyrrolidone; or a mixture of paraffinic, isoparaffinic, cycloparaffinic and aromatic hydrocarbons, such as SOLVESSO^{™}200. Suitable solvents are commercially available.

Suitable preservatives for use in the composition of the present invention include all substances which can normally be used for this purpose in agrochemical compositions of this type and again are well known in the art. Suitable examples that may be mentioned include the commercially available preservatives PREVENTOL^{®} (from Bayer AG) and PROXEL^{®} (from Bayer AG).

Suitable antioxidants for use in the compositions of the present invention are all substances which can normally be used for this purpose in agrochemical compositions, as is known in the art. Preference is given to butylated hydroxytoluene.

Suitable thickeners for use in the compositions include all substances which can normally be used for this purpose in agrochemical compositions, for example xanthan gum, PVOH, cellulose and its derivatives, clay hydrated silicates, magnesium aluminum silicates or a mixture thereof. Again, such thickeners are known in the art and are available commercially.

The composition may further comprise one or more solid adherents. Such adherents are known in the art and available commercially. They include organic adhesives, including tackifiers, such as celluloses or substituted celluloses, natural and synthetic polymers in the form of powders, granules, or lattices, and inorganic adhesives such as gypsum, silica, or cement.

In the method and use of the present invention, the combination of the active ingredients flufenacet and mesotrione can be applied to the locus where control is desired, such as to the leaves of plants and/or the surrounding soil, by a convenient method. The "locus" refers to the place where the plants are growing, the place where the plant propagation materials of the plants are sown or the place where the plant propagation materials of the plants will be sown.

As noted above, the present invention also relates to the use of a combination of flufenacet and mesotrione, for example in a composition or formulation as described above, for controlling or modifying the growth of undesirable vegetation in crops. The combination of flufenacet and mesotrione is useful in treating a range of crops, including cereals, for example wheat, barley, rye, oats, maize, rice, sorghum, triticale and related crops; beet, for example sugar beet and fodder beet; fruit, such as pomes, stone fruit and soft fruit, for example apples, grapes, pears, plums, peaches, almonds, cherries, and berries, for example strawberries, raspberries and blackberries; leguminous plants, for example beans, lentils, peas, soybeans, and peanuts; oil plants, for example rape, mustard, and sunflowers; cucurbitaceae, for example marrows, cucumbers, and melons; fibre plants, for example cotton, flax, hemp, and jute; citrus fruit, for example oranges, lemons, grapefruit and mandarins; vegetables, for example spinach, lettuce, asparagus, cabbages, carrots, onions, tomatoes, potatoes, and paprika; ornamentals, such as flowers, shrubs, broad-leaved trees and evergreens, for example conifers, as well as sugarcane.

In a preferred embodiment, the method or composition of the present invention is used for controlling growth of undesirable vegetation in maize, soybean, cereals, rice, cotton, potatoes, sunflower, peanuts and sugarcane. Suitable crops include those which are tolerant to flufenacet and mesotrione. The tolerance can be natural tolerance produced by selective breeding or can be artificially introduced by genetic modification of the crop. In this respect, 'tolerance' means a low susceptibility to damage caused by a particular herbicide, in the present case flufenacet and meostrione.

The compositions employed in the practice of the present invention can be applied in a variety of ways known to those skilled in the art, at various concentrations. The method and compositions of the present invention are useful in controlling the growth of undesirable vegetation by pre-planting, pre-emergence or post-emergence application to the locus where control is desired. The active ingredients flufenacet and mesotrione may be applied to the leaves of the undesired plant by conventional methods including coating, spraying, sprinkling, dipping, soaking, injection, irrigation, and the like.

The method of the present invention may employ other pesticides, in addition to the combination of flufenacet and mesotrione. For example, compositions of the present invention may contain or be mixed with other pesticides, such as fungicides, insecticides and nematicides, growth factor enhancers and fertilizers, to enhance the activity of the present invention or to widen its spectrum of activity. Similarly, the method of the present invention may be employed in conjunction with the use of one or more of the aforementioned active ingredients, again to obtain an enhanced efficacy or broader spectrum of activity.

Although the invention has been described with reference to preferred embodiments and examples thereof, the scope of the present invention is not limited only to those described embodiments. As will be apparent to persons skilled in the art, modifications and adaptations to the above-described invention can be made without departing from the spirit and scope of the invention, which is defined by the appended claims.

Embodiments of the present invention will now be described, for illustrative purposes only, by way of the following examples.

### Formulation Examples

### Comparative Example 1

A 60% w/w Flufenacet WG formulation having the composition set out in Table 1 below was prepared.

**Table 1**

| | |
|---|---|
| Flufenacet | 600g |
| Supralate^{®} (sodium lauryl sulfate, Witco Inc., Greenwich) | 5g |
| Reax^{®}88B (sodium lignosulfonate, Westvaco Corp) | 50g |
| Potassium sulphate | 345g |

### Comparative Example 2

A 48% w/w Mesotrione SC formulation having the composition set out in Table 2 below was prepared.

**Table 2**

| | |
|---|---|
| Mesotrione | 480g |
| Propylene glycol | 100g |
| Tristyrylphenol ethoxylates | 10g |
| Sodium lignosulfonate | 20g |
| Xanthan gum | 2g |
| Silicone oil (in the form of a 75% emulsion in water) | 10g |
| Water | Balance to 1L |

### Example 3

A WG formulation containing 36% w/w Flufenacet and 7.5% w/w Mesotrione and having the composition set out in Table 3 below was prepared.

**Table 3**

| | |
|---|---|
| Flufenacet | 360g |
| Mesotrione | 75g |
| Supralate^{®} (sodium lauryl sulfate, Witco Inc., Greenwich) | 5g |
| REAX^{®}88B (sodium lignosulfonate, Westvaco Corp) | 50g |
| Potassium carbonate | 510g |

### Example 4

An SC formulation containing 10% w/w Flufenacet and 12% w/w Mesotrione and having the composition set out in Table 4 below was prepared.

**Table 4**

| | |
|---|---|
| Flufenacet | 100g |
| Mesotrione | 120g |
| Propylene glycol | 100g |
| Tristyrylphenol ethoxylates | 10g |
| Sodium lignosulfonate | 20g |
| Xanthan gum | 2g |
| Silicone oil (75% v/v emulsion in water) | 10g |
| Water | Balance to 1L |

### Example 5

An EC formulation containing 20% w/w Flufenacet and 8% w/w Mesotrione and having the composition set out in Table 5 below was prepared.

**Table 5**

| | |
|---|---|
| Flufenacet | 200g |
| Mesotrione | 80g |
| Tristyrylphenol ethoxylates | 50g |
| Calcium dodecylbenzenesulphonate | 10g |
| Silicone oil | 1g |
| N-methylpyrrolidone | Balance to 1L |

### Example 6

A WP formulation containing 40% w/w Flufenacet and 12% w/w Mesotrione and having the composition set out in Table 6 below was prepared.

**Table 6**

| | |
|---|---|
| Flufenacet | 400g |
| Mesotrione | 120g |
| DISPERSOGEN^{®}1494 (sodium salt of a cresol-formaldehyde condensation) | 50 g |
| SIPERNAT^{®}622S (Silicon dioxide) | 80g |
| Kaolin | 350g |

### Example 7

A WG formulation containing 10% w/w Flufenacet and 5% w/w Mesotrione and having the composition set out in Table 7 below was prepared.

**Table 7**

| | |
|---|---|
| Flufenacet | 100g |
| Mesotrione | 50g |
| SUPRALATE^{®} (sodium lauryl sulfate, Witco Inc., Greenwich) | 5g |
| REAX^{®}88B (sodium lignosulfonate, Westvaco Corp) | 50g |
| Potassium sulphate | 795g |

### Example 8

An SC formulation containing 50% w/w Flufenacet and 5% w/w Mesotrione and having the composition set out in Table 8 below was prepared.

**Table 8**

| | |
|---|---|
| Flufenacet | 500g |
| Mesotrione | 50g |
| Propylene glycol | 100g |
| Tristyrylphenol ethoxylates | 10g |
| Sodium lignosulfonate | 20g |
| Xanthan gum | 1.5g |
| Silicone oil (75% v/v emulsion in water) | 10g |
| Water | Balance to 1L |

### Example 9

A CS formulation containing 30% w/w Flufenacet and 7.5% w/w Mesotrione and having the composition set out in Table 9 below was prepared.

**Table 9**

| | |
|---|---|
| Flufenacet | 300g |
| Mesotrione | 75g |
| SOLVESSO^{™}100 | 150g |
| PVA | 8g |
| Sodium lignosulfonate | 6g |
| SUPRASEC^{®}5005 | 3g |
| Diethylenetriamine | 14g |
| Propylene glycol | 40g |
| Xanthan gum | 1g |
| NIPACIDE BIT 20 | 1g |
| Silicone oil (75% v/v emulsion in water) | 2g |
| Water | 400g |

### Biological Example

Maize and sugarcane plants were sown in randomized blocks in the field. Different types of weeds and their relative density in each block were identified and are listed in Table 10 below.

Compositions according to the above examples were applied 50 days after planting by spraying. After spraying, the blocks were maintained for about 2 weeks. Two weeks after application, the blocks were examined to determine the efficiency of each formulation in controlling the growth of weeds. The results are set forth below in Table 11.

**Table 10. Type of Weed**

| **Type of weed** | **Relative density (%)** |
|---|---|
| *Setaria spp.* | 15 |
| *Amaranthus spp.* | 10 |
| *Chenopodium spp.* | 10 |
| *Digitaria spp.* | 10 |
| *Echinochloa spp.* | 5 |
| *Lolium spp.* | 5 |
| *Mercurialis spp.* | 15 |
| *Polygonum spp.* | 5 |
| *Solanum spp.* | 10 |
| *Abutilon spp.* | 5 |
| *Datura spp.* | 10 |

As can be seen from the results set out in Table 11 below, the formulations of the present invention, comprising a combination of flufenacet and mesotrione, exhibited a significantly increased effect in the control of the target weeds, compared with either flufenacet and mesotrione alone or that predicted from a combination of the two active ingredients. This increased effect is a clear indication of synergy between the two active ingredients.

**Table 11. Efficiency of Control of Weeds(%)**

| | Active Ingredients | | Efficiency of Control of Weeds (% weeds killed) | | | | | | | | | | |
|---|---|---|---|---|---|---|---|---|---|---|---|---|---|
| **Example** | Flufen acet (g/ha) | Mesotri one (g/ha) | *Seta ria spp.* | *Amarant hus spp.* | *Chenopo dium spp.* | *Digita ria spp.* | *Echinoc hloa spp.* | *Loliu* m *spp.* | *Mercuri alis spp.* | *Polygo num spp.* | *Solan um spp.* | *Abutil on spp.* | *Datura spp.* |
| Untreated | 0 | 0 | 0 | 0 | 0 | 0 | 0 | 0 | 0 | 0 | 0 | 0 | 0 |
| Example 1 | 500 | 0 | 20 | 35 | 20 | 10 | 20 | 30 | 25 | 20 | 35 | 30 | 20 |
| Example 2 | 0 | 144 | 15 | 20 | 25 | 15 | 20 | 30 | 30 | 20 | 20 | 20 | 35 |
| Example 3 | 360 | 75 | 95 | 95 | 85 | 90 | 95 | 90 | 100 | 85 | 90 | 90 | 90 |
| Example 4 | 100 | 120 | 90 | 100 | 90 | 90 | 95 | 90 | 90 | 85 | 90 | 90 | 85 |
| Example 5 | 200 | 80 | 90 | 100 | 90 | 90 | 90 | 100 | 95 | 95 | 100 | 100 | 85 |
| Example 6 | 200 | 60 | 95 | 90 | 95 | 90 | 95 | 100 | 90 | 100 | 95 | 100 | 90 |
| Example 7 | 100 | 50 | 95 | 90 | 95 | 95 | 100 | 95 | 95 | 95 | 95 | 95 | 90 |
| Example 8 | 500 | 50 | 100 | 95 | 100 | 95 | 85 | 100 | 95 | 100 | 100 | 95 | 95 |
| Example 9 | 300 | 75 | 95 | 95 | 85 | 90 | 90 | 95 | 100 | 90 | 95 | 95 | 85 |

## Claims

1. A composition comprising a herbicidally effective amount of (A) flufenacet and (B) mesotrione.

2. The composition according to claim 1, wherein the weight ratio of flufenacet to mesotrione is in the range of from 50:1 to 1:50.

3. The composition according to claim 2, wherein the weight ratio of flufenacet to mesotrione is in the range of from 20:1 to 1:20.

4. The composition according to claim 3, wherein the weight ratio of flufenacet to mesotrione is in the range of from 5:1 to 1:2.

5. The composition according to any preceding claim, wherein the total amount of flufenacet and mesotrione is from 5% to 99% by weight of the composition.

6. The composition according to claim 5, wherein the composition comprises, by weight, from 10% to 98% of flufenacet and from 5% to 20% of mesotrione.

7. The composition according to claim 5, wherein the composition comprises, by weight, from 12% to 36% of flufenacet and from 7.5% to 15% of mesotrione.

8. The composition according to any preceding claim, further comprising one or more auxiliaries selected from extenders, carriers, solvents, surfactants, stabilizers, anti-foaming agents, anti-freezing agents, preservatives, antioxidants, colorants, thickeners, solid adherents, fillers, wetting agents, dispersing agents, lubricants, anticaking agents, deformers and diluents.

9. The composition according to any preceding claim, being formulated as a water-soluble concentrate (SL), an emulsifiable concentrate (EC), an emulsion (EW), a micro-emulsion (ME), a suspension concentrate (SC), an oil-based suspension concentrate (OD), a flowable suspension (FS), a water-dispersible granule (WG), a water-soluble granule (SG), a water-dispersible powder (WP), a water soluble powder (SP), a granule (GR), an encapsulated granule (CG), a fine granule (FG), a macrogranule (GG), an aqueous suspo-emulsion (SE), a capsule suspension (CS) or a microgranule (MG).

10. A herbicidal composition substantially as hereinbefore described.

11. A method of controlling undesirable vegetation in plants comprising applying to the vegetation or to the locus thereof a herbicidally effective amount of the herbicidal composition of any preceding claim.

12. The method according to claim 11, wherein the plant growth is being controlled in a crop comprising maize, soybean, cereals, cotton, potatoes, sunflower, peanuts and sugarcane.

13. The method according to either of claims 11 or 12, wherein the plant growth being controlled is of one or more of foxtail (*Setaria spp*.), wild finger millet (*Eleusine spp*.), cough grass (*Digitaria spp*.), rye grass (*Lolium spp*.), shepherds purse (*Capsella bursapastories*), fat hen *(Chenopodium album),* double thorn (*Oxygonum sinuatum*), black bind weed (*polygonum convolvulus*), mexican marigold (*Tagetes minuta*), gallant soldier (*Galinsoga parviflora*), white charlock (*Raphanus raphanastrium*), blackgrass (*Alopecurus spp*.), meadow grass (*Poa spp*.), silky bent grass (*Apera spp*.), barnyardgrass (*Echinochloa spp*.), rough cocklebur (*Xanthium strumarium*), great ragweed (*Ambrosia trifida*), Velvetleaf (*Abutilon theophrasti*), goosefoots (*Chenopodium spp*.), amaranth (*Amaranthus spp*.), knotweed (*polygonum spp*.), Lamb's-quarters *(Chenopodium album),* redroot pigweed (*Amaranthus retroflexus*), wild mustard (*Sinapis arvensis*), common ragweed (*Ambrosia artemisiifolia*), tall waterhemp (*Amaranthus tuberculatus*), volunteer adzuki bean (*Vigna angularis*), vetch (*Vicia spp*.), creeping buttercup (*Ranunculus repens*), eastern black nightshade (*Solanum ptychanthum*), mercuries (*Mercurialis spp*.), velvetleaf (*Abutilon spp*.), angel's trumpets (*Datura spp*.), black nightshade (*Solanum spp*.), common orache (*Atriplex patula*), thorn-apple (*Datura stramonium*), annual mercury *(Mercurialis annua).*

14. The method according to claim 13, wherein the plant growth being controlled is one or more of *Setaria spp., Echinochloa spp., Digitaria spp., Lolium spp., Chenopodium spp., Amaranthus spp., Solanum spp., Mercurialis spp., Polygonum spp., Abutilon spp.* and *Datura spp.*

15. The method according to claim 14, wherein the plant growth being controlled is one or more of *Lolium spp., Chenopodium spp., Mercurialis spp., Polygonum spp., Abutilon spp.* and *Datura spp.*

16. The method according to any of claims 11 to 15, wherein the composition is applied at an application rate of from 0.15 kilograms/hectare (kg/ha) to 1.2 kg/ha of the total amount of active ingredient flufenacet and mesotrione being applied.

17. The method according to claim 16, wherein the composition is applied at an application rate of from 0.15 kg/ha to 0.6 kg/ha of the total amount of active ingredient flufenacet and mesotrione being applied.

18. The method according to claim 17, wherein the composition is applied at an application rate of from 100 to 1000 g/ha of flufenacet and from 50 to 200 g/ha of mesotrione.

19. The method according to claim 18, wherein the composition is applied at an application rate of from 120 to 360 g/ha of flufenacet and 75 to 150 g/ha of mesotrione.

20. The method according to any of claims 11 to 19, wherein the composition is applied pre-planting, pre-emergence and/or post-emergence.

21. A method of controlling plant growth at a locus comprising applying to the locus herbicidally effective amounts of flufenacet and mesotrione.

22. The method according to claim 21, wherein the plant growth is being controlled in a crop comprising maize, soybean, cereals, cotton, potatoes, sunflower, peanuts and sugarcane.

23. The method according to either of claims 21 or 22, wherein flufenacet and mesotrione are applied to the locus at the same time.

24. The method according to either of claims 21 or 22, wherein flufenacet and mesotrione are applied to the locus consecutively.

25. The method according to any of claims 21 to 24, wherein the plant growth being controlled is of one or more of foxtail (*Setaria spp*.)*,* wild finger millet (*Eleusine spp*.), cough grass (*Digitaria spp*.)*,* rye grass (*Lolium spp*.)*,* shepherds purse (*Capsella bursapastories*), fat hen *(Chenopodium album),* double thorn (*Oxygonum sinuatum*), black bind weed (*polygonum convolvulus*), mexican marigold (*Tagetes minuta*), gallant soldier (*Galinsoga parviflora*), white charlock (*Raphanus raphanastrium*), blackgrass (*Alopecurus spp*.), meadow grass (*Poa spp*.), silky bent grass (*Apera spp*.), barnyardgrass (*Echinochloa spp*.), rough cocklebur (*Xanthium strumarium*)*,* great ragweed (*Ambrosia trifida*), Velvetleaf (*Abutilon theophrasti*), goosefoots (*Chenopodium spp*.), amaranth (*Amaranthus spp*.), knotweed (*polygonum spp*.), Lamb's-quarters *(Chenopodium album),* redroot pigweed (*Amaranthus retroflexus*), wild mustard (*Sinapis arvensis*), common ragweed (*Ambrosia artemisiifolia*), tall waterhemp (*Amaranthus tuberculatus*), volunteer adzuki bean (*Vigna angularis*), vetch (*Vicia spp*.), creeping buttercup (*Ranunculus repens*), eastern black nightshade (*Solanum ptychanthum*), mercuries (*Mercurialis spp*.), velvetleaf (*Abutilon spp*.), angel's trumpets (*Datura spp*.), black nightshade (*Solanum spp*.), common orache (*Atriplex patula*), thorn-apple (*Datura stramonium*), annual mercury *(Mercurialis annua).*

26. The method according to claim 25, wherein the plant growth being controlled is one or more of *Setaria spp., Echinochloa spp., Digitaria spp., Lolium spp., Chenopodium spp., Amaranthus spp., Solanum spp., Mercurialis spp., Polygonum spp., Abutilon spp.* and *Datura spp.*

27. The method according to claim 26, wherein the plant growth being controlled is one or more of *Lolium spp., Chenopodium spp., Mercurialis spp., Polygonum spp., Abutilon spp.* and *Datura spp.*

28. The method according to any of claims 21 to 27, wherein the weight ratio of flufenacet to mesotrione applied is in the range of from 50:1 to 1:50.

29. The method according to claim 28, wherein the weight ratio of flufenacet to mesotrione applied is in the range of from 20:1 to 1:20.

30. The method according to claim 29, wherein the weight ratio of flufenacet to mesotrione applied is in the range of from 5:1 to 1:2.

31. The method according to any of claims 21 to 30, wherein flufenacet and mesotrione are applied at an application rate of from 0.15 kilograms/hectare (kg/ha) to 1.2 kg/ha of the total amount of active ingredient flufenacet and mesotrione being applied.

32. The method according to claim 31, wherein flufenacet and mesotrione are applied at an application rate of from 0.15 kg/ha to 0.6 kg/ha of the total amount of active ingredient flufenacet and mesotrione being applied.

33. The method according to claim 32, wherein flufenacet and mesotrione are applied at an application rate of from 100 to 1000 g/ha of flufenacet and from 50 to 200 g/ha of mesotrione.

34. The method according to claim 33, wherein flufenacet and mesotrione are applied at an application rate of from 120 to 360 g/ha of flufenacet and 75 to 150 g/ha of mesotrione.

35. The method according to any of claims 21 to 34, wherein flufenacet and mesotrione are applied pre-planting, pre-emergence and/or post-emergence.

36. A method for controlling unwanted plant growth substantially as hereinbefore described.

37. The use of a combination of flufenacet and mesotrione in the control of plant growth at a locus.

38. The use of a combination of flufenacet and mesotrione substantially as hereinbefore described.
